# DEMANDE DE BREVET EUROPEEN

(11) **EP 1 111 281 A1**
(43) Date de publication de la demande: **27.06.2001**
(21) Numéro de dépôt: 99125750.2
(22) Date de dépôt: 23.12.1999
(51) Int. Cl.: F16K 7/14, G01N 1/00, B01L 3/00, B01J 19/00

(54) **Dispositif d'analyse comprenant une plaquette de petites dimensions à circulation de fluides**

(71) Demandeur: Scitec Research SA, 1000 Lausanne (CH)
(72) Inventeur: Renaud, Philippe, CH-1028 Préverenges (CH); Donzel, Alain, CH-1007 Lausanne (CH); Gehriger, Daniel, CH-1004 Lausanne (CH); Maggini, Ronny, CH-1024 Ecublens (CH)
(74) Mandataire: Thérond, Gérard Raymond

(57) **Abrégé**

Dispositif d'analyses biologiques, de synthèses ou de préparations comprenant :
- une plaquette d'analyse de petites dimensions dans laquelle sont introduits au moins deux substances chimiques ou biologiques, et
- un appareil électronique de commande à recevoir ladite plaquette, caractérisé en ce que ladite plaquette comprend une arrivée d'un fluide propulseur, une sortie dudit fluide, et au moins un orifice de purge, reliés par des canaux à une pluralité de réservoirs, de valves et, de chambres de préparation, lesdits éléments étant structurés en creux dans au moins une face d'un substrat rigide et étant hermétiquement obturés par une feuille de recouvrement élastiquement déformable formant, au droit des valves, des membranes d'obturation ou d'ouverture desdites valves, et en ce que l'appareil électronique comprend une source continue d'un fluide propulseur, un circuit électronique permettant de gérer un processus de fermeture/ouverture des valves par pression/relâchement d'actionneurs sur les membranes d'obturation de façon à isoler une quantité déterminée Q1 d'une première substance, une quantité déterminée Q2 d'une deuxième substance, à éliminer à travers une purge les quantités superflues de chaque substance, à les déplacer vers des zones de mélange ou de réaction, puis jusqu'à une zone de détection ou de prélèvement.

## Description

La présente invention a pour objet un dispositif d'analyses biologiques, de synthèses ou de préparations comprenant une plaquette de petites dimensions, réutilisable ou non, destinée à recevoir soit un échantillon à analyser, soit un produit en solution qu'on souhaite transformer par réaction chimique et un appareil de commande et de mesure dans lequel est introduite ladite plaquette pour permettre de doser les fluides, de les mélanger, de les faire réagir entre eux de les faire circuler jusqu'à une zone de la plaquette permettant une analyse par des moyens spectrométriques et éventuellement d'extraire ledit mélange pour des analyses complémentaires.

Il existe actuellement une demande accrue pour des systèmes permettant de faire :
- des analyses nécessitant une quantité minimale d'un fluide corporel (sang, liquide amniotique, salive, etc.),
- d'avoir des procédure de préparation d'un échantillon en vue d'une analyse chimique ou biologique à partir de quantités minimales de fluide et de réactif dont le coût peut être élevé, et
- des procédures de microsynthèse de substances chimiques en vue d'un screening dans la recherche de nouveau médicaments.

Dans le cadre de l'analyse biologique il est également souhaitable d'avoir un dispositif qui permet une analyse de proximité sans l'aide d'un personnel hospitalier très qualifié, qui respecte l'environnement une fois l'analyse effectuée et qui puisse être produit à un moindre coût notamment lorsque ledit dispositif n'est utilisé qu'une seule fois.

A cet effet, l'invention a pour objet un dispositif d'analyses biologiques, de synthèses ou de préparations comprenant une plaquette d'analyse de petites dimensions dans laquelle sont introduits au moins deux substances chimiques ou biologiques, et un appareil électronique de commande destiné à recevoir ladite plaquette. La plaquette comprend une arrivée d'un fluide propulseur, une sortie dudit fluide, et au moins un orifice de purge, reliés par des canaux à une pluralité de réservoirs, de valves, et de chambres de préparation, lesdits éléments étant structurés en creux dans au moins une face d'un substrat rigide et étant hermétiquement obturés par une feuille de recouvrement élastiquement déformable formant, au droit des valves, des membranes d'obturation ou d'ouverture desdites valves. L'appareil électronique comprend une source continue d'un fluide propulseur, un circuit électronique permettant de gérer un processus de fermeture/ouverture des valves par pression/relâchement d'actionneurs sur les membranes d'obturation de façon à isoler une quantité déterminée Q1 d'une première substance, une quantité déterminée Q2 d'une deuxième substance, à éliminer à travers une purge les quantités superflues de chaque substance, à les déplacer vers des zones de mélange ou de réaction, puis jusqu'à une zone de détection ou de prélèvement. Les quantités déterminées Q1, Q2 sont mesurées dans des branches de dosage de la plaquette dont les sections et longueurs définissent lesdites quantités, lesdites branches étant délimitées par des noeuds de canaux à travers lesquels est injecté le fluide propulseur pour éliminer le surplus des substances chimiques ou biologiques jusqu'à un orifice de purge.

Lorsque le fluide propulseur est un gaz, la plaquette comprend en outre des barrières hydrophobes permettant de retenir les substances chimiques et biologiques, ou des mélanges ou produits de réaction de celle-ci, tout en laissant s'échapper le gaz propulseur. L'appareil électronique peut également comporter, au niveau de la zone de détection de la plaquette des moyens de mesure et d'interprétation d'un signal représentatif d'un paramètre chimique ou biologique de l'analyse, de la synthèse ou de la préparation effectuée au moyen de la plaquette selon l'invention.

Selon un premier mode de réalisation, se référant essentiellement à un dispositif ayant un fluide propulseur gazeux, les têtes des branches de dosage sont reliées à un noeud d'où part un unique canal, allant jusqu'à une barrière hydrophobe et, sur lequel est interposée une valve permettant de dériver dans une branche de mélange de diamètre très inférieur audit canal les quantités Q1 et Q2 jusque les zones de détection ou de réaction.

Selon un deuxième mode de réalisation, les têtes des branches de dosage sont reliées à un noeud d'où partent deux canaux pourvus de valves permettant de séparer la circulation des liquides dans les zones pour le dosage des quantités Q1 et Q2 et la circulation du mélange dans la branche de mélange et dans la zone de détection, ou de réaction.

Pour permettre d'éliminer successivement les surplus de tête et de queue de chaque liquide L₁ et L₂, chaque branche de dosage comprend une valve dans sa partie sensiblement médiane.

Selon un autre aspect de l'invention, le substrat comporte une structuration sur ses deux faces, et les canaux, réservoirs, valves, filtres, chambres et barrières hydrophobes peuvent être reliés, si nécessaire à la circulation des fluides et du fluide propulseur, par des passages traversants, ledit substrat comportant alors deux feuilles de recouvrement.

Ainsi, de façon plus générale le dispositif selon l'invention permet dans un milieu confiné de très petites dimensions d'effectuer des analyses et des réactions chimiques ou biologiques, d'effectuer des préparations en vue d'analyses ou de réactions ultérieures, ainsi que de réaliser des synthèses de très petites quantités de substances en vue d'un screening pour la recherche de nouveaux médicaments.

D'autres avantages et caractéristiques de l'invention apparaîtront à la lecture de la description détaillée qui suit concernant plusieurs modes et variantes de réalisation de mesure d'un paramètre biologique dans un fluide corporel au moyen d'un réactif spécifique en utilisant un gaz comme fluide propulseur. Cette description est faite en référence aux dessins annexés dans lesquels :
- la figure 1 est un schéma bloc du dispositif d'analyse;
- la figure 2 est le schéma de principe d'un premier mode de réalisation d'une plaquette d'analyse;

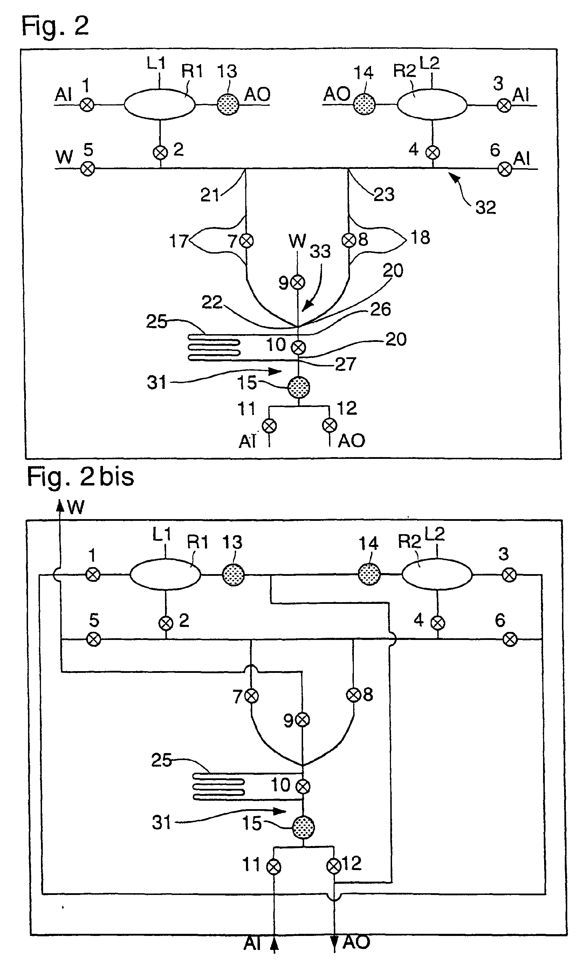

- la figure 2 bis correspond à la figure 2 avec les connexions de tous les canaux vers l'extérieur;

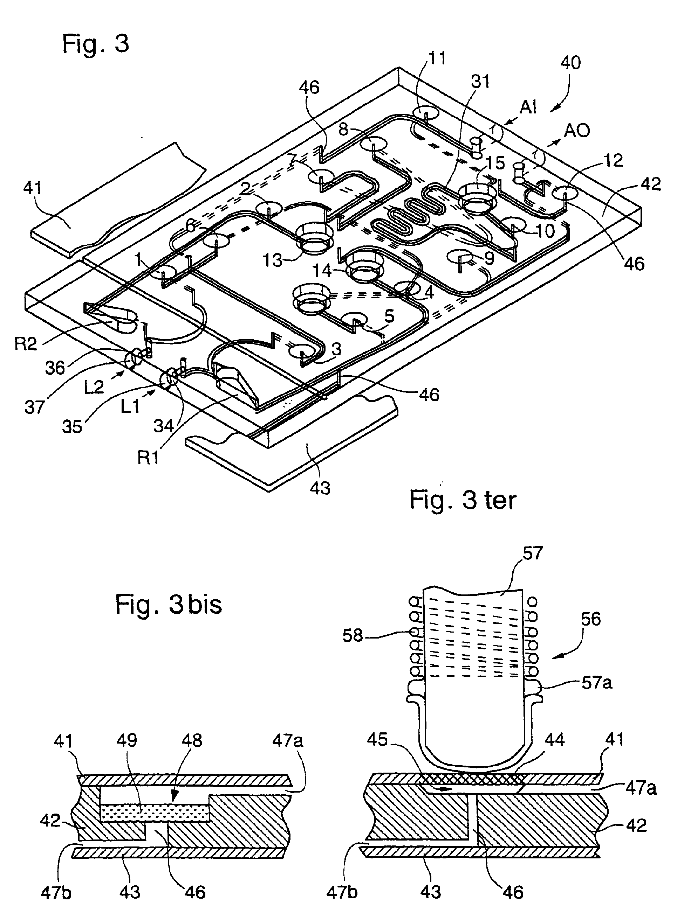

- la figure 3 est une représentation en perspective de la plaquette de test correspondant à la figure 2 bis;
- la figure 3 bis est une représentation en coupe d'un mode de réalisation d'une barrière hydrophobe;
- la figure 3 ter est une représentation en coupe d'un mode de réalisation d'une valve;

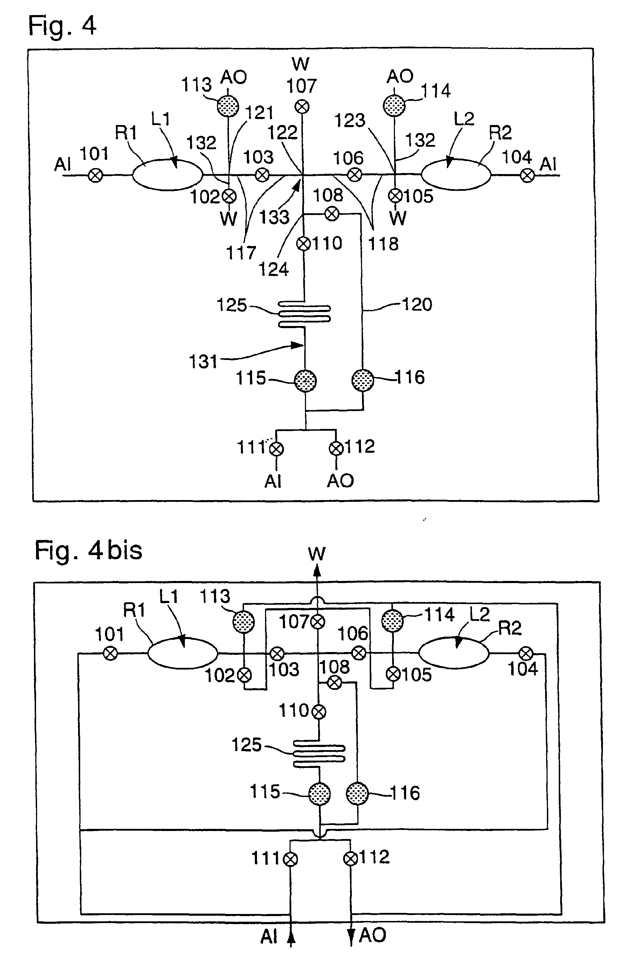

- la figure 4 est le schéma de principe d'un deuxième mode de réalisation d'une plaquette d'analyse;
- la figure 4 bis correspond à la figure 4 avec les connexions de tous les canaux vers l'extérieur;

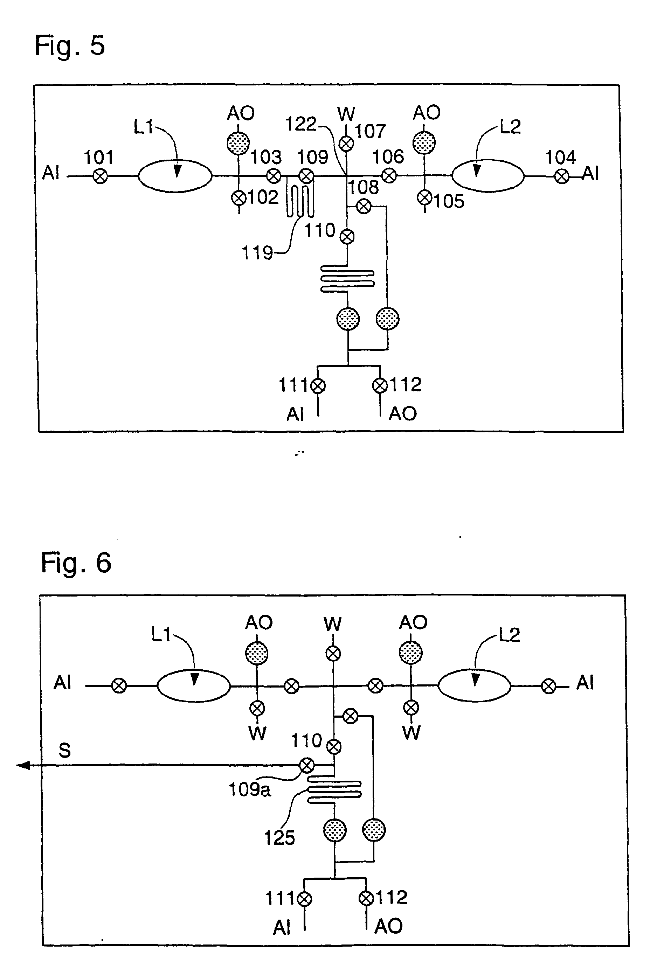

- la figure 5 est le schéma de principe d'un troisième mode de réalisation;
- la figure 6 est le schéma de principe d'un quatrième mode de réalisation;

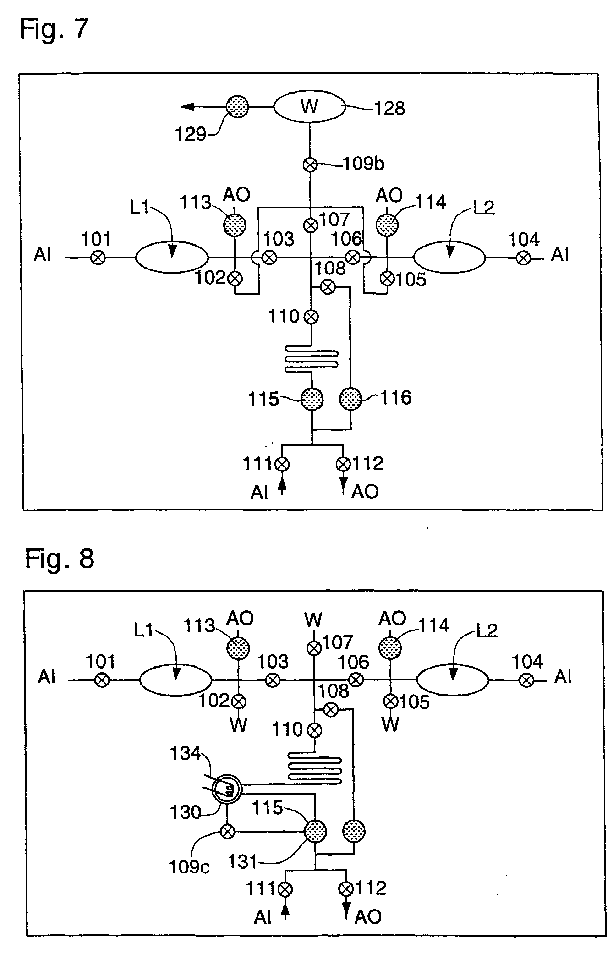

- la figure 7 est le schéma de principe d'un cinquième mode de réalisation;
- la figure 8 est le schéma de principe d'un sixième mode de réalisation;

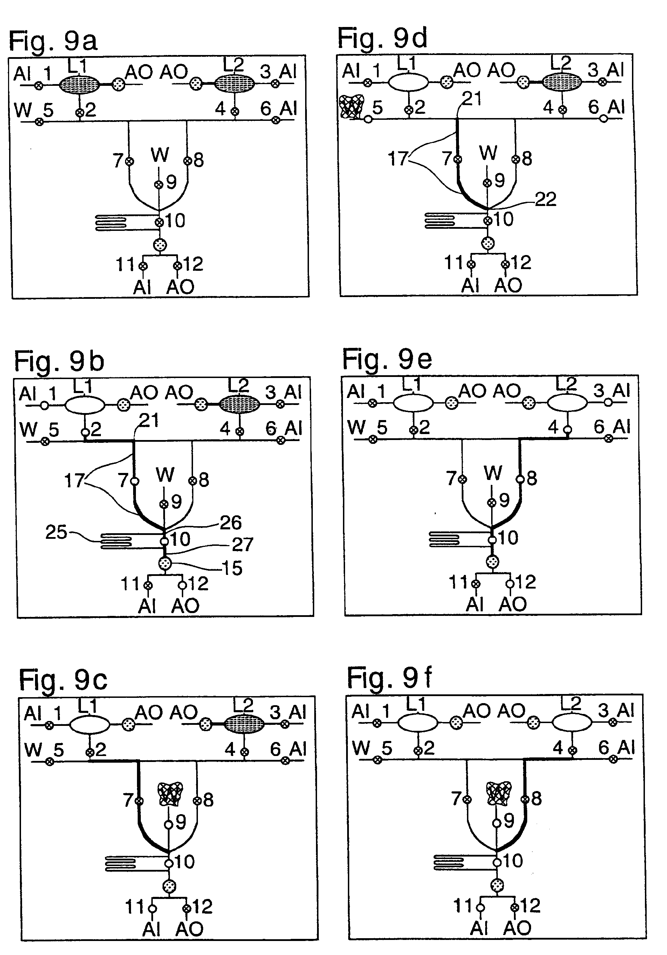

- les figures 9a à 9i représentent schématiquement les différentes étapes d'un processus de mesure avec une plaquette d'analyse correspondant au premier mode de réalisation, et

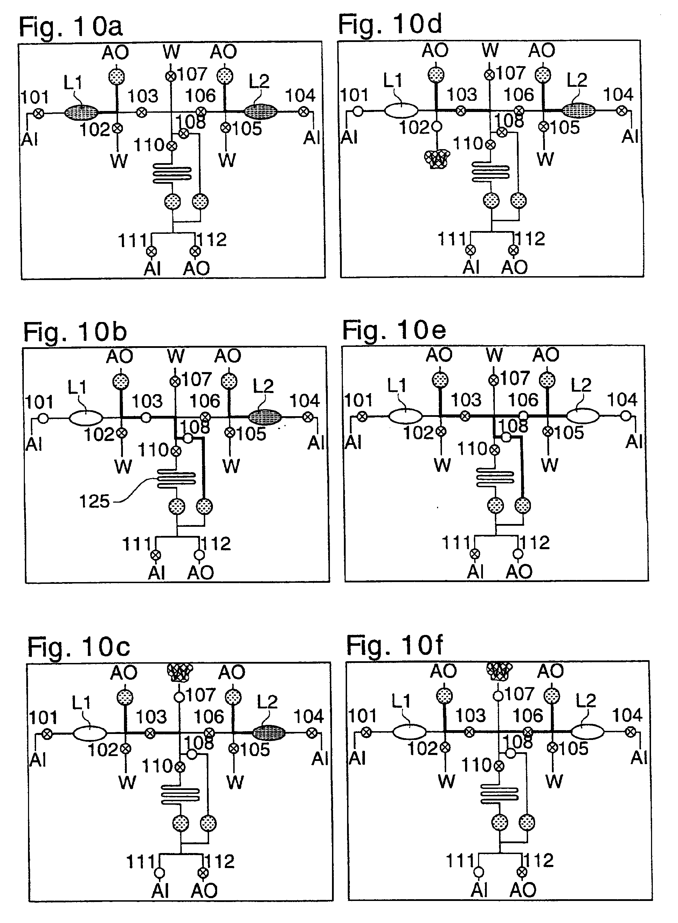

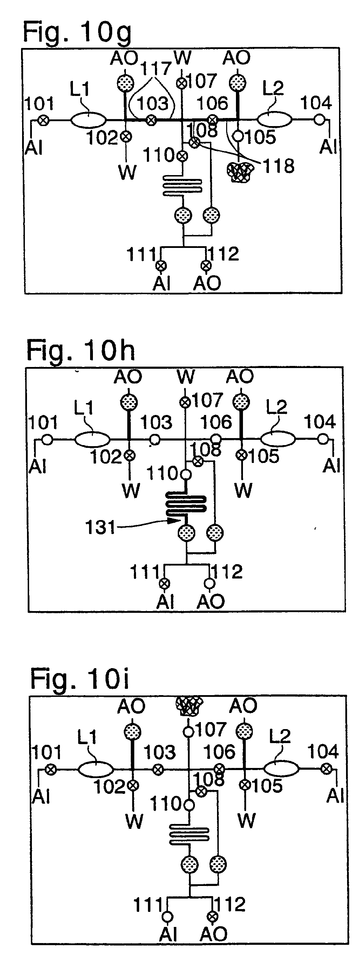

- les figures 10a à 10i représentent schématiquement les différentes étapes d'un processus de mesure avec une plaquette d'analyse correspondant au deuxième mode de réalisation.

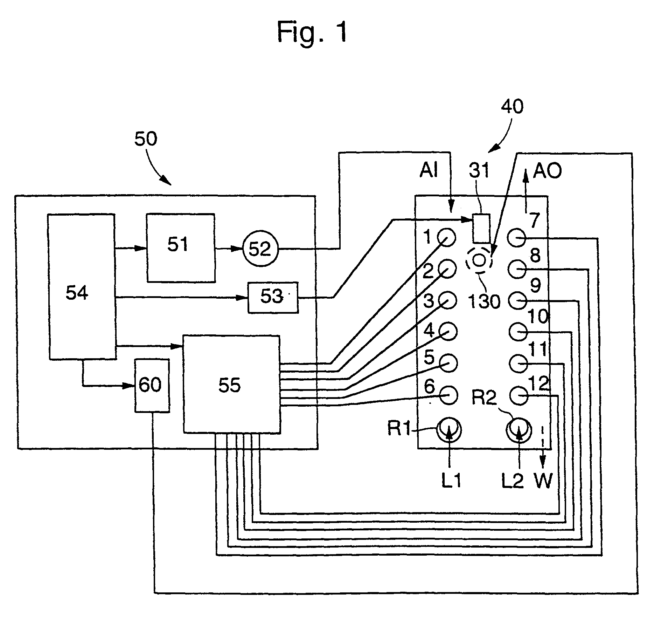

Le dispositif d'analyse selon l'invention pour l'analyse et la mesure d'un paramètre biologique dans un fluide corporel, représenté par le schéma bloc de la figure 1, comprend un appareil de commande et de mesure 50 dans lequel on introduit une plaquette d'analyse 40 à usage unique destinée à recevoir au moins un réactif L₁ et un échantillon L₂ de fluide corporel. Les liquides L₁ et L₂ sont déplacés à l'intérieur de la plaquette 40 pour être dosés, mélangés et conduits jusqu'à une zone de détection 31, relié à un appareil de détection 53. Cette opération est effectuée au moyen d'une source de gaz propulseur 51, dont la pression est contrôlée par un manomètre 52, ledit gaz propulseur étant dirigé dans des canaux déterminés au moyen de valves ayant leurs membranes d'ouverture/fermeture 44 à la surface de la plaquette 40. Cette source de gaz propulseur est par exemple un compresseur de l'air ambiant, ou une bonbonne de gaz inerte sous pression, tel que l'azote. Ces valves sont commandées par des actionneurs 56 représentés schématiquement à la figure 3 ter lorsque la valve est en position ouverte. Ils se composent d'un doigt rigide 57, pourvu d'une collerette 57a sur laquelle appuie un ressort de pression 58. Ces doigts sont amenés en position d'ouverture par un mécanisme 56, pneumatique ou électromagnétique, commandé par un circuit électronique 54, selon une séquence prédéterminée correspondant à la configuration des canaux, valves, etc. pour faire circuler les fluides L₁ et L₂ à l'intérieure de la plaquette 40. Cette configuration spécifique sera exposée plus en détails en référence aux exemples 1 à 6 ci-après. L'appareil de mesure et de commande 50 peut en outre comporter d'autres unités utiles ou nécessaires au type d'analyse effectué, tel qu'un système de régulation de la température 60 d'une chambre de préparation 130 intégrée dans la plaquette d'analyse 40. De même l'appareil de détection 53 sera adapté au type d'analyse effectué, et nécessairement non invasif étant donné que le produit de la réaction entre les fluides L₁ et L₂ se trouve confiné à l'intérieur de la plaquette 40. En conséquence le moyen de détection le plus approprié est un appareil de type optique, tel qu'un spectromètre. On comprendra facilement que la force avec laquelle les actionneurs 56 doivent appuyer sur les membranes 44 doit être corrélée avec la pression du gaz propulseur. Dans les expériences réalisées des ressorts de pression 58, exerçant une force de 4, 5 N ont donné des résultats satisfaisants pour une pression de gaz propulseur de l'ordre de 1 bar pour une configuration de plaquette d'analyse correspondant aux exemples qui vont maintenant être décrits.

Ces exemples correspondent, mais ne sont pas limités, à des modes de réalisation permettant de faire réagir et d'amener dans une zone de détection des quantités bien définie d'un fluide corporel Q1 et d'un réactif Q2 au moyen d'une plaquette d'analyse ayant au plus 12 valves. Il est bien évident, sans sortir du cadre de l'invention, que le nombre de valves peut être différents, par exemple pour effectuer des dosages successifs avec plusieurs réactifs.

### Exemple 1 Premier mode de réalisation

La description de ce premier mode de réalisation est faite en référence aux figures 1 à 3ter, ainsi qu'aux figures 9a 9i en ce qui concerne le fonctionnement.

A la figure 3, on a représenté en perspective une plaquette d'analyse 40 formée d'un substrat rigide 42 ayant sensiblement les dimensions d'une carte de crédit (environ 90 x 60 x 4 mm), sur les faces supérieure et inférieure desquelles sont appliquées deux feuilles de recouvrement 41, 43 en un matériau élastiquement déformable, c'est-à-dire un matériau capable de supporter plusieurs sollicitations en revenant à sa position initiale. Cette configuration "double face" comporte certaines contraintes de mise en oeuvre, mais présente l'avantage de réduire sensiblement de moitié la surface de la plaquette d'analyse, et d'offrir beaucoup plus de fonctions sur une même surface.

Comme cela sera expliqué par la suite, le substrat 42 comprend une structuration en creux qui peut être obtenue avec un matériau rigide par tout procédé connue de l'homme de l'art. Ce produit étant un produit de grande consommation à usage unique, le procédé préféré consiste à réaliser un moule permettant d'obtenir par injection plastique une structuration en creux appropriée, sur l'une, l'autre ou les deux faces du substrat. Le matériau qui s'est révélé le plus approprié pour réaliser le substrat 42 par injection plastique est le polyméthylnéthacrylate (PMMA). De même, pour les feuilles de recouvrement, le matériau "élastiquement déformable" le plus appropriée s'est révélé être un film PE/PET appliqué sur le substrat sous une pression 20 bar. à 125°C pendant 5 à 6 secondes. Pour augmenter l'adhésion du film PE/PET, il est possible d'effectuer une illumination UV pendant 3 heures pour augmenter les interconnexions entre le(s) film(s) 41, 43 et le substrat 42. A ce stade, on observera que, bien que la plaquette soit à usage unique, les membranes des valves peuvent être sollicitées plusieurs fois au cours d'une même analyse et que leur propriété élastique est importante.

On va maintenant décrire en détails l'architecture de ce premier mode de réalisation, essentiellement en référence au schéma de principe de la figure 2, dans lequel sont figurés des réservoirs R1, R2, des valves référencées de 1 à 12, des barrières hydrophobes référencées de 13 à 16, des arrivées d'air Al, des sorties d'air AO, des orifices de purge W, des canaux de liaison entre ces différents éléments et des branches de fonction délimitées par des "noeuds" formés par la jonction de deux canaux ou branches. L'architecture de la plaquette d'analyse sera mieux comprise en se référant de préférence au schéma de principe de la figure 2, toutes les références n'étant pas rapportées sur la représentation en perspective de la figure 3 pour plus de clarté.

Les éléments accessibles depuis l'extérieur comprennent d'abord deux réservoirs :
- un réservoir R1 destiné à recevoir un liquide L₁,
- un réservoir R2 destiné à recevoir un liquide L₂ constitué par le réactif spécifique du paramètre biologique à mesurer.

Ces réservoirs communiquent avec l'extérieur par des canaux 34, 36 obturés par des bouchons de silicone 35, 37 à travers lesquels les liquides L₁, L₂ sont introduits au moyen de l'aiguille d'une seringue. On observera que la plaquette d'analyse peut être conçue et commercialisée en ayant déjà le réactif sous forme liquide L₂, ou sous forme sèche souvent plus apte à une longue conversation. Dans ce dernier cas, le liquide L₂ injecté avant l'emploi sera seulement un solvant, tel qu'un sérum physiologique. Dans l'exemple représenté, ces canaux 34, 36 sont formés dans l'épaisseur du substrat 42, en prévoyant de façon connue des tiroirs dans le moule d'injection plastique servant à conformer ledit substrat.

Chaque réservoir R₁, R₂, est relié à l'arrivée Al de gaz propulseur par un canal sur lequel est interposée une valve référencée respectivement 1 et 3. Chaque valve comprend également un canal de sortie relié à la sortie AO de gaz propulseur et sur lequel est interposé une barrière hydrophobe 13 (respectivement 14), et un autre canal allant jusqu'à une valve 2 (respectivement 4). Les valves 2 et 4 débouchent dans un canal 32, fermé à une extrémité par une valve 6 en communication avec Al et à l'autre extrémité par une valve 5 qui permet de mettre ledit canal 32 en communication avec l'extérieur par l'intermédiaire d'un orifice de purge W pour éliminer les quantités superflues de L₁ et L₂ et éventuellement récupérer l'échantillon analysé, comme on le verra par la suite.

Le canal 32 comporte deux noeuds 21 et 23 desquels partent une branche de dosage 17 pour le liquide L₁ sur le parcours de laquelle est interposée une valve 7, et une branche de dosage 18 pour le liquide de L₂ sur le parcours de laquelle est interposée une valve 8, ces deux branches se rejoignant à un noeud 22.

Le noeud 22 est prolongé par un canal 20, interrompu par une valve 10, et allant jusqu'à une barrière hydrophobe 15 reliée respectivement à l'arrivée Al du gaz propulseur par l'intermédiaire d'une valve 11 et à la sortie AO dudit gaz, par l'intermédiaire d'une valve 12. Le canal 20 comporte, de part et d'autre de la valve 10 deux noeuds 26, 27, desquels part une branche de mélange 25 en serpentin de façon à créer une turbulence favorable au mélange des liquides L₁ et L₂ dans cette zone. Cette branche de mélange 25 présente la caractéristique d'avoir un canal de beaucoup plus faible section que le canal d'amenée 20. A titre d'exemple, le canal d'amenée à une section de 0,25 mm² et le canal de mélange à une section de 0,0375 mm². Le canal d'amené 20 est également prolongé par un canal 33 en communication avec l'orifice de purge W par l'intermédiaire d'une valve 9. En ce qui concerne enfin la zone de mesure 31, celle-ci se trouve entre le noeud 27, situé entre la valve 10 et la barrière hydrophobe 15. Pour focaliser les moyens d'analyse sur la zone 31, par exemple pour une analyse spectrométrique, le canal correspondant aura de préférence une plus forte section, comme cela est visible sur la figure 3.

La figure 2bis correspond au même schéma que la figure 2, mais comporte en plus les canaux reliant entre eux respectivement toutes les arrivées Al de gaz propulseur, toutes les sorties AO de gaz propulseur et tous les orifices de purge W. Comme on peut le voir, cela implique que certains canaux ne devant pas être raccordés se recoupent. Comme on peut le voir sur la figure 3, cet inconvénient peut être éliminé par une configuration double face du substrat 42, des canaux ou portions de canaux, les valves et les barrières hydrophobes étant alors reliés par des passages traversants 46 dont quelques-uns sont référencés sur la figure 3.

A la figure 3bis, on a représenté en coupe une barrière hydrophobe comprenant un canal d'amenée 47a, un puits 48 au fond duquel est collée une membrane hydrophobe 49, ledit puits 48 communiquant avec un canal de départ 47b au moyen d'un passage traversant 46. Le matériau formant la membrane hydrophobe est par exemple un Nylon traité pour être hydrophobe. Selon un autre mode de réalisation, la membrane hydrophobe peut être maintenue en place au moyen d'une petite bague (non représentée) chassé dans le puits. Les canaux d'amenée 47a, de départ 47b et le puits 48 conformé dans le substrat 42 sont obturés par deux feuilles de recouvrement 41, 43 appliquées sur chaque face.

De même à la figure 3ter, on a représenté une valve en coupe comprenant un siège 45 dans lequel débouche un canal d'amenée 47a, ledit siège étant relié à un canal de départ 47b par un passage traversant 46, l'ensemble étant obturé par les deux feuilles de recouvrement 41 et 43.

Dans les figures 3bis et 3 ter, les canaux d'amenée/départ sont représentés alignés dans un même plan de coupe, mais il est bien évident qu'ils peuvent avoir une orientation respective quelconque. De même, la fonction amenée/départ de chaque canal peut être inversée et une barrière hydrophobe, ou une valve peut comporter plus de deux canaux.

Pour améliorer la circulation des fluides dans les canaux, il est possible, avant l'obturation par les feuilles de recouvrement d'appliquer un traitement hydrophobe sur les parois desdits canaux.

En se référant maintenant plus particulièrement aux figures 9a à 9i on explique ci-après les étapes successives du fonctionnement de la plaquette d'analyse à partir du moment où chaque liquide L₁, L₂ a déjà été introduit dans les réservoirs R1, R2, le gaz propulseur étant de l'air maintenu à une pression sensiblement comprise entre 0,2 et 1 bar. Préalablement on indiquera que le passage d'une étape à la suivante passe par une phase où toutes les valves sont fermées par les doigts des actionneurs 56. Dans les schémas la présence d'un liquide dans un canal ou une portion de canal est représentée par un trait plus épais. On notera enfin que les références de la figure 2 ont été reportées seulement quand elles étaient utiles à la compréhension de l'étape concernée.

### Remplissage L₁ (Fig. 9b)

On ouvre les vannes 1, 2, 7, 10 et 12, de façon à ce que L₁ remplisse les canaux sur ce parcours, depuis la vanne 2, ou légèrement après celle-ci, jusqu'à la barrière hydrophobe 15. La quantité de L₁ dans R1 est en effet prévue de telle sorte qu'il ne reste pas de liquide entre R1 et la valve 2, soit en injectant une quantité de L₁ correspondant à cette exigence, soit en conformant le volume de R1 dans ce but. On observera également que L₁ ne pénètre pas dans la branche de mélange 25 par les noeuds 26, 27 en raison, d'une part de la différence de diamètre des conduits, d'autre part de la pression exercée par le gaz emprisonné dans ladite branche 25. Toujours en raison de la compressibilité du gaz emprisonné L₁ ne s'étend pas. ou peu au delà de la valve 2 et du noeud 21, une éventuelle extension n'ayant de toute façon aucune influence sur les étapes ultérieures.

### Dosage L₁ (Fig 9c et 9d)

Le dosage quantitatif de L₁ dans la branche 17 entre les noeuds 21 et 26 s'effectue en deux étapes pour éliminer successivement les surplus de tête et de queue.

A la figure 9c on a représenté l'élimination du surplus de tête par ouverture des valves 9, 10 et 11.

A la figure 9d le surplus de queue est éliminé par ouverture des valves 5 et 6. A ce stade on a isolé, dans la branche de dosage 17 une quantité déterminée Q1 entre les noeuds 21 et 22.

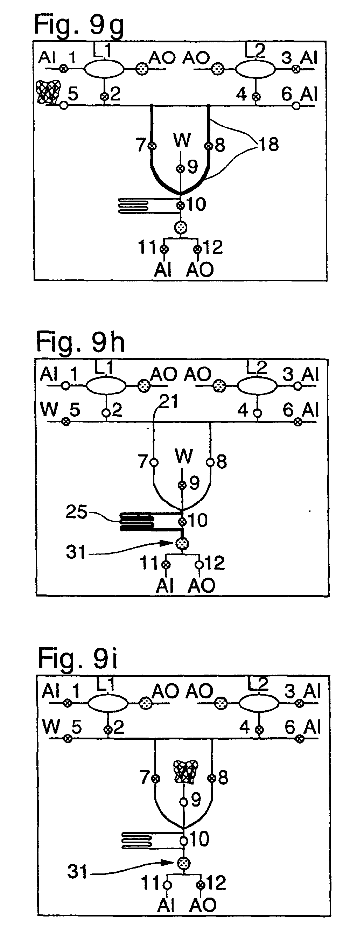

### Dosage de L₂ (Fig. 9e, 9f, 9g)

Le processus de dosage d'une quantité Q₂ de L₂ est symétrique de celui décrit ci-dessus pour L₁. Par ouverture des valves 3, 4, 8 , 10 et 12 on effectue le remplissage de L₂. Par ouverture des vannes 9, 10 et 11, et ensuite des valves 5 et 6, on élimine les surplus de L₂ en tête et en queue de sorte qu'on emprisonne une quantité déterminée Q2 dans la branche de dosage 18 entre les noeuds 22 et 23.

Dans l'exemple représenté, les branches 17, 18 le dosage de L₁ et L₂ ont la même longueur, mais il est bien évident qu'on peut agir sur ce paramètre longueur, ou sur le paramètre section pour modifier le rapport Q1/Q2.

### Mélange de L₁ et L₂ (figure 9h)

En ouvrant les valves 1, 2, 3, 4, 7, 8, ou de façon équivalente (non représentée) les valves 6, 7, 8, on force les quantités Q1 et Q2 de L₁ et L₂ à se mélanger dans la branche 25 pour atteindre la zone de détection 31.

### Récupération du produit de la réaction (figure 9i)

Si on le souhaite, soit pour un contrôle, soit pour des analyses complémentaires, on peut extraire le produit de réaction de la zone de détection 31 par l'orifice de purge W en ouvrant les valves 9, 10, et 11.

Comme on le voit, d'après la description ci-dessus l'architecture de la plaquette d'analyse permet de choisir le sens de circulation d'un fluide dans un canal déterminé, par un simple jeu de valves.

### Exemple 2 Deuxième mode de réalisation

Cet exemple sera décrit en référence aux figures 4, 4bis et aux figures 10a à 10i en ce qui concerne le mode de fonctionnement.

Dans le schéma de principe de la figure 4 et de la figure 4bis représentant la connexion des canaux jusqu'aux orifices extérieurs, les canaux, branches et barrières hydrophobes ont la même numérotation que dans le premier mode de réalisation, augmentée d'une centaine, lorsqu'elles assurent la même fonction. Par contre, les valves également numérotées à partir de 100 n'ont pas toujours les mêmes fonctions que les valves numérotées de 1 à 12 dans le premier mode de réalisation. Ce schéma de principe ne sera donc pas décrit plus en détail, sauf en ce qui concerne une différence importante concernant la séparation d'un circuit constitué par les branches 117, 118 et 120, permettant le dosage quantitatif Q₁, Q₂ des liquides L₁, L₂, d'un autre circuit constitué par les branches de mélange et d'analyse 125, 131. Cette différence sera mieux comprise en se référant aussi aux figures 10a à 10i, et plus particulièrement aux figures 10b à 10d concernant le dosage quantitatif du liquide L₁.

Lorsqu'on ouvre les valves 101, 103 et 108, la valve 110 donnant accès à la branche de mélange 125 étant fermée, il n'y a aucun risque pour qu'une quantité, même infime de L₁ pénètre dans cette branche. Il en est de même lorsqu'on effectue les étapes de purge par l'orifice W pour éliminer les surplus de tête (figure 10c) et de queue (figure 10d).

Cette même succession d'étapes est répétée pour le liquide L₂ (figures 10e à 10g) en permettant d'avoir dans chaque branche de dosage 117, 118 des quantité déterminées Q₁, Q₂.

Le mélange de Q₁ et Q₂ jusqu'à la zone de détection 131 s'effectue ensuite par ouverture des valves 101, 103, 104, 106, 110, 112, voire seulement 101, 103, 110, 112 ou 104, 106, 110, 112. Comme précédemment, le produit de réaction peut être récupéré par ouverture des valves 110 et 111. Pour encore plus de clarté, ces différentes étapes sont résumées dans le tableau ci-après.

| Etapes | No valves ouvertes | Fonctions |
|---|---|---|
| a | aucune | injection L₁, L₂ dans R₁, R₂ |
| b | 101, 103, 108, 112 | remplissage L₁ |
| c | 107, 108, 111 | élimination tête L₁ |
| d | 101, 102 | élimination queue L₁ |
| e | 104, 106, 108, 112 | remplissage L₂ |
| f | 107, 108, 111 | élimination tête L₂ |
| g | 104, 105 | élimination queue L₂ |
| h | 101, 103, 104, 106, 110, | mélange et analyse |
| | 112 | |
| i | 110, 111 | Q₁ + Q₂ |
| | | évacuation mélange Q₁ + Q₂ |

Comme on le voit, ce deuxième mode de réalisation fait l'économie d'une valve qui aurait dû avoir la référence 109. Sans changer la configuration de l'appareil de commande et de mesure pour agir sur 12 valves, il est donc possible de rendre fonctionnelle cette valve manquante pour conformer la plaquette d'analyse avec d'autres fonctions, comme expliqué de façon non limitative dans les exemples qui suivent.

### Exemple 3 Troisième mode de réalisation

En se référant à la figure 5, on voit que la portion du canal située entre la valve 103 et le noeud 122 comporte une valve 109 de part et d'autre de laquelle une dérivation 119, de plus petit diamètre que le canal principal, permet d'obtenir avec la même plaquette d'analyse une variation du rapport Q₁/Q₂ par une programmation appropriée des actionneurs agissant sur la valve 109.

### Exemple 4 Quatrième mode de réalisation

Ce mode de réalisation, représenté à la figure 6, permet grâce à une valve 109a interposée entre la branche de mélange 125 et la valve 110, d'extraire par un orifice S indépendant de l'orifice de purge W, un échantillon du produit de la réaction entre les liquides L₁ et L₂, sans risque de contamination avec des résidus pouvant se trouver dans d'autres canaux. Partant de la situation où toutes les valves sont fermées, il suffit en effet de commander l'ouverture des valves 109a et 111.

### Exemple 5 Cinquième mode de réalisation

Dans les exemples précédents, les produits de purge, têtes et queues de L₁ et L₂ et le produit de la réaction entre L₁ et L₂ étaient rejetés à l'extérieur par l'orifice de purge W. En prévoyant, comme représenté à la figure 7 sur le canal d'amenée à l'orifice W une valve 109b conduisant à un réservoir supplémentaire 128 obturé par une barrière hydrophobe 129, il est possible de confiner tous les produits de purge à l'intérieur de la plaquette d'analyse, ce qui contribue à protéger l'environnement.

### Exemple 6 Sixième mode de réalisation

Avant d'effectuer une mesure dans la zone de détection 131, il peut être nécessaire de laisser les liquides L₁, L₂ réagir un certain temps. A cet effet, il est prévu à la figure 8 de faire précéder la zone de détection 131 d'une valve 109c et d'une chambre de préparation 130 également reliée à une barrière hydrophobe, par exemple la barrière 115. Cette chambre de préparation peut également contenir des moyens 134 permettant de thermostater le mélange L₁, L₂.

## Revendications

1. Dispositif d'analyses biologiques, de synthèses ou de préparations comprenant :
- une plaquette d'analyse de petites dimensions dans laquelle sont introduits au moins deux substances chimiques ou biologiques, et
- un appareil électronique de commande à recevoir ladite plaquette, caractérisé en ce que ladite plaquette comprend une arrivée d'un fluide propulseur, une sortie dudit fluide, et au moins un orifice de purge, reliés par des canaux à une pluralité de réservoirs, de valves et, de chambres de préparation, lesdits éléments étant structurés en creux dans au moins une face d'un substrat rigide et étant hermétiquement obturés par une feuille de recouvrement élastiquement déformable formant, au droit des valves, des membranes d'obturation ou d'ouverture desdites valves, et en ce que l'appareil électronique comprend une source continue d'un fluide propulseur, un circuit électronique permettant de gérer un processus de fermeture/ouverture des valves par pression/relâchement d'actionneurs sur les membranes d'obturation de façon à isoler une quantité déterminée d'une première substance, une quantité déterminée Q2 d'une deuxième substance, à éliminer à travers une purge les quantités superflues de chaque substance, à les déplacer vers des zones de mélange ou de réaction, puis jusqu'à une zone de détection ou de prélèvement.

2. Dispositif selon la revendication 1, caractérisé en ce que le fluide propulseur est un gaz et en ce que la plaquette comprend outre des barrières hydrophobes.

3. Dispositif selon la revendication 1, caractérisé en ce que l'appareil électronique des moyens de mesure et d'interprétation d'un signal représentatif d'un paramètre chimique ou biologique de l'analyse, de la synthèse ou de la préparation effectuée au moyen de la plaquette.

4. Dispositif d'analyse selon les revendications 1 ou 2, caractérisé en ce que les quantités déterminées Q1, Q2 sont mesurées dans des branches de dosage de la plaquette dont les sections et longueurs définissent lesdites quantités, lesdites branches étant délimitées par des noeuds de canaux à travers lesquels est injecté le fluide propulseur pour éliminer le surplus de chaque substance jusqu'à un orifice de purge.

5. Dispositif d'analyse selon la revendication 4, caractérisé en ce que les têtes des branches de dosage sont reliées à un noeud d'où part un unique canal, allant jusqu'à une barrière hydrophobe et, sur lequel est interposée une valve permettant de dériver dans une branche de mélange de diamètre très inférieur audit canal les quantités Q1 et Q2 jusqu'à la zone de détection.

6. Dispositif d'analyse selon la revendication 4, caractérisé en ce que les têtes des branches de dosage sont reliées à un noeud d'où partent deux canaux pourvus de valves permettant de séparer les circulations de liquides dans les zones de dosage des quantités Q1 et Q2 et la circulation du mélange dans la branche de mélange et dans la zone de détection.

7. Dispositif d'analyse selon la revendication 4, caractérisé en ce que chaque branche de dosage des quantités Q1 et Q2 est formée de deux canaux séparés par une valve permettant d'éliminer successivement les surplus de fluide à analyser ou de réactif, en queue côté réservoir et en tête côté zone de mélange, par des canaux reliés à un orifice de purge.

8. Dispositif d'analyse selon la revendication 1, caractérisé en ce que la zone mélange de la plaquette est formée par une branche d'un canal configurée en serpentin.

9. Dispositif d'analyse selon la revendication 2, caractérisé en ce que les canaux de la plaquette reliant la zone de détection et la zone de mélange sont obturés à une extrémité par une barrière hydrophobe du côté de la zone de détection et reliés à l'autre extrémité à un orifice de purge pour élimination du mélange, pour contrôles ou pour analyses complémentaires .

10. Dispositif d'analyse selon les revendications 1 ou 2, caractérisé en ce que le substrat comporte une structuration sur ses deux faces, et en ce que les canaux, réservoirs, valves, filtres, chambres et barrières hydrophobes peuvent être reliés si nécessaire à la circulation des liquides et du fluide p propulseur par des passages traversants, ledit substrat comportant alors deux feuilles de recouvrement.

11. Dispositif d'analyse selon la revendication 1, caractérisé en ce qu'au moins un réservoir de la plaquette d'analyse destiné à une substance chimique ou biologique est relié à un canal débouchant en dehors de ladite plaquette, ledit canal étant obturé par un bouchon à travers lequel peut être injecté ladite substance.

12. Dispositif d'analyse selon la revendication 5, caractérisé en ce qu'au moins un canal d'une branche de dosage comporte en outre une valve supplémentaire reliée à son entrée et à sa sortie à un canal dérivé de section très inférieure à celle dudit canal, ledit canal permettant de faire varier le rapport entre les quantités Q1 et Q2.

13. Dispositif d'analyse selon la revendication 2, caractérisé en ce que le canal prolongeant la branche de mélange du côté de l'orifice de purge comprend un embranchement pourvu d'une valve prolongé par un canal allant jusqu'à un autre orifice de purge permettant d'extraire de la plaquette par un circuit indépendant le mélange analysé pour contrôles ou pour analyses complémentaires.

14. Dispositif d'analyse selon les revendications 4, 7 et 9 caractérisé en ce que tout ou partie des canaux de purge sont reliés à un réservoir "de stockage" obturé par une barrière hydrophobe.

15. Dispositif d'analyse selon la revendication 1, caractérisé en ce que la zone de détection de la plaquette est précédée d'une valve additionnelle et d'une chambre de préparation.

16. Dispositif d'analyse selon la revendication 15, caractérisé en ce que la chambre de préparation est pourvue de moyens de chauffage et de contrôle de la température pendant une durée déterminée avant l'ouverture de la valve permettant au mélange d'entrer dans la zone de détection.

17. Dispositif d'analyse selon la revendication 1, caractérisé en ce que la plaquette est formée par un substrat en un matériau plastique tel que PMMA, structuré par injection dans un moule et par au moins une feuille de recouvrement en un matériau plastique élastiquement déformable et transparent, tel que le PE/PET, ladite feuille de recouvrement étant thermosoudée sur toute la surface dudit substrat.

18. Dispositif d'analyse selon la revendication 1, caractérisé en ce que la plaquette d'analyse comprend en outre une pince séparable permettant de fermer les valves d'accès/sortie des réservoirs de fluide biologique et de réactif avant mise en place de ladite plaquette dans l'appareil de mesure.

19. Dispositif d'analyse selon la revendication 1, caractérisé en ce que les actionneurs sont formés par des doigts agissant sur les membranes d'obturation des valves, lesdits doigts étant actionnés par des moyens pneumatiques ou électromagnétiques en fonction des signaux reçus du circuit électronique.

20. Dispositif d'analyse selon la revendication 1, caractérisé en ce que le fluide propulseur est de l'air provenant d'un compresseur.

21. Dispositif d'analyse selon la revendication 1, caractérisé en ce que le fluide propulseur est un gaz inerte sous pression, tel que l'azote

22. Dispositif d'analyse selon les revendications 20 ou 21, caractérisé en ce que le gaz propulseur est maintenu à une pression constante comprise entre 0,2 et 1 bars.

23. Procédé d'analyse biologique avec un dispositif selon l'une quelconque des revendications précédente, caractérisé en ce qu'il comprend les étapes consistant à :
- introduire dans un premier réservoir un échantillon de fluide biologique à analyser;
- introduire dans un deuxième réservoir un réactif spécifique du paramètre biologique à mesurer;
- faire circuler le fluide biologique et le réactif dans la plaquette pour mesurer des quantités déterminées Q1 et Q2 en éliminant les surplus de fluide et de réactif à travers des purges, et
- faire circuler les quantités Q1 et Q2, d'abord jusqu'à une zone de mélange, puis jusqu'à une zone de détection.
